Europäisches Patentamt

**European Patent Office**

Office européen des brevets

(11) Veröffentlichungsnummer : **0 142 695**
**B1**

(12) **EUROPÄISCHE PATENTSCHRIFT**

(45) Veröffentlichungstag der Patentschrift :
**27.05.87**

(21) Anmeldenummer : **84112123.9**

(22) Anmeldetag : **10.10.84**

(51) Int. Cl.⁴ : **C 09 C 1/00**

(54) **Schuppenpigmente, Verfahren zu ihrer Herstellung und ihre Verwendung.**

(30) Priorität : **21.10.83 JP 196114/83**
**21.10.83 JP 196115/83**

(43) Veröffentlichungstag der Anmeldung :
**29.05.85 Patentblatt 85/22**

(45) Bekanntmachung des Hinweises auf die Patenterteilung : **27.05.87 Patentblatt 87/22**

(84) Benannte Vertragsstaaten :
**BE CH DE FR GB IT LI NL**

(56) Entgegenhaltungen :
**EP-A- 0 077 959**
**WORLD SURFACE COATINGS ABSTRACTS, Band 46,**
**Nr. 367, Januar 1973, Seite 10, Nr. 8, The Paint**
**Research Association, Teddington, GB**
**CHEMICAL ABSTRACTS, Band 83, Nr. 16, 20. Oktober**
**1975, Seiten 118,119, Nr. 133529q, Columbus, Ohio,**
**US**
**RÖMPP, Chemie Lexikon, 2. Auflage, Seite 1330**

(73) Patentinhaber : **Merck Patent Gesellschaft mit bes-**
**chränkter Haftung**
**Frankfurter Strasse 250**
**D-6100 Darmstadt (DE)**

(72) Erfinder : **Watanabe, Takaji**
**314, Kamikomachi**
**Oomiya-shi Saitama-ken (JP)**
Erfinder : **Noguchi, Tamio**
**851-10, Tsumada**
**Atsugi-shi Kanagawa-ken (JP)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft schuppenförmige Pigmente, die in der Kosmetik eingesetzt werden können.

Es ist bekannt schuppenförmige Pulver, wie z. B. Glimmer wie Muscovit oder Sericit, oder Tonmaterialien wie Kaolin oder Talk als Ausgangsmaterial zur Herstellung von Gesichtspudern in der Kosmetik einzusetzen. Da diese Pigmente für sich allein nicht die notwendigen Haft- und Ausbreit- (Extension) eigenschaften auf der Haut aufweisen, werden diese Pigmente zur Herstellung von Gesichtspudern üblicherweise noch mit Titandioxid, Metallseifen und Calciumcarbonat gemischt.

Es wurde nun gefunden, daß die Eigenschaften der bisher üblichen Pigmente sowohl bezüglich Haftfähigkeit und Ausbreitung (Extension) auf der Haut als auch in Bezug auf Glanz und Transparenz durch eine Beschichtung der schuppenförmigen Substrate deutlich verbessert werden können.

Gegenstand der Erfindung sind daher schuppenförmige Pigmente, die dadurch gekennzeichnet sind, daß ein schuppenförmiges Substrat mit einem festhaftenden Überzug aus Bariumsulfat, gegebenenfalls zusammen mit einem Metalloxid, Metalloxidhydrat oder Metallcarbonat, versehen ist.

Gegenstand der Erfindung ist auch ein Verfahren zur Herstellung eines schuppenförmigen Pigments, das dadurch gekennzeichnet ist, daß man eine wässerige Suspension eines schuppenförmigen Substrats gleichzeitig oder nacheinander mit einer wässerigen, Bariumionen-enthaltenden Lösung und einer wässerigen, Sulfationen-enthaltenden Lösung versetzt und danach das mit Bariumsulfat beschichtete Pigment abtrennt, trocknet und gegebenenfalls kalziniert.

Gegenstand der Erfindung ist schließlich auch die Verwendung dieser Pigmente zur Herstellung von kosmetischen Mitteln.

Aus der EP 0 077 959 sind transparente farbige Pigmente bekannt, wobei ein schuppenförmiges Substrat, wie z. B. Glimmer, Talk oder Glas, mit einem farbigen Metalloxid bzw. -hydroxid beschichtet ist, und wobei in dieser Schicht zusätzlich ein gemeinsam mit dem Metalloxid ausgefälltes Erdalkalimetalloxid bzw. -hydroxid ist. Weder aus dieser EP 0 077 959 noch aus der Tatsache, daß pulverförmiges Bariumsulfat selbst neben z. B. auch Glimmer, Talk oder Kaolin ein bekannter Grundstoff für die Puder-Herstellung ist, kann ein Hinweis entnommen werden, daß die Eignung eines plättchenförmigen Substrats, wie z. B. Glimmer, Talk oder Kaolin, als Puder-Bestandteil durch eine Beschichtung mit Bariumsulfat verbessert wird.

Als Ausgangsmaterial für die Herstellung der erfindungsgemäßen Pigmente kann Glimmer, wie z. B. Muscovit oder Sericit, Talk und Kaolin verwendet werden. Zur Beschichtung wird dieses Substrat in einer Teilchengröße von etwa 1-100, vorzugsweise 1-50 μm, in Wasser suspendiert und im einfachsten Falle mit einer Bariumsulfatschicht überzogen. Dabei wird zu der wässerigen Suspension entweder bei einer Temperatur von etwa 5-100 °C vorzugsweise 20-80 °C, gleichzeitig oder nacheinander sowohl eine wässerige, Bariumionen-enthaltende Lösung als auch eine wässerige, Sulfationen-enthaltende Lösung gegeben. Vorteilhaft wird die Suspension dabei lebhaft gerührt und die Lösungen werden mit einer solchen Geschwindigkeit zugegeben, daß das ausgefällte Bariumsulfat auf der Oberfläche des schuppenförmigen Substrats niedergeschlagen wird.

Zur Herstellung der Bariumionen-enthaltenden Lösung sind im Prinzip alle wasserlöslichen Bariumsalze, wie z. B. Bariumchlorid, Bariumhydroxid, Bariumnitrat und Bariumsulfid geeignet. Wegen des günstigen Preises, der leichten Zugänglichkeit und der hohen Reinheit wird Bariumchlorid bevorzugt. Für die Herstellung der Sulfationenenthaltenden Lösung können alle löslichen Sulfate, wie z. B. Natriumsulfat, Kaliumsulfat, Magnesiumsulfat, Natriumhydrogensulfat oder Kaliumhydrogensulfat sowie Schwefelsäure verwendet werden.

Die Mengen, in denen die Reaktionspartner eingesetzt werden, sind an sich nicht besonders kritisch. Insbesondere kann die Menge des auf das Substrat aufgefällten Bariumsulfats in weiten Grenzen variiert werden je nach den erwünschten Eigenschaften bezüglich Haftfestigkeit, Ausbreitung und Transparenz auf der Haut.

In der Regel geht man von Suspensionen aus, die etwa 10 Teile des schuppenförmigen Substrats enthalten, und gibt dazu die Sulfat- und die Bariumsalzlösung als etwa 5-25 gewichtsprozentige Lösungen. Vorzugsweise wird das Bariumsalz in einer Menge von 0,8-0,98 mol pro mol Sulfat eingesetzt. Nach der Beschichtung mit dem Bariumsulfat wird das Pigment in der Regel abgetrennt, mit Wasser gewaschen und bei etwa 105-110 °C getrocknet.

In einer weiteren Ausführungsform der Erfindung wird zusätzlich zur Bariumsulfatschicht noch ein Metalloxid, Metalloxidhydrat oder Metallcarbonat aufgefällt, wobei diese zusätzliche Fällung sowohl farblos als auch farbig sein kann. Um diese zusätzliche Fällung zu erreichen, wird für die Bariumsulfatfällung ein Sulfat eines Metalles ausgewählt, das ein schwer lösliches Oxid, Oxidhydrat oder Carbonat bildet.

Geeignet sind beispielsweise Titanylsulfat, Aluminiumsulfat, Zinksulfat und Magnesiumsulfat für farblose Zusatzfällungen oder Einsen (II)- oder Eisen (III) — sulfat, Eisenammoniumsulfat, Chromsulfat, Mangansulfat oder Kobaltsulfat für farbige Zusatzfällungen. Die Fällung kann so vorgenommen werden, daß nach Beendigung der Bariumsulfatfällung die Suspension mit einer Base oder einer alkalischen Carbonatlösung versetzt wird. Als Base kann beispielsweise eine wässerige Lösung von Natriumhydroxid, Kaliumhydroxid, Ammoniumhydroxid oder einer Substanz, die in wässeriger Lösung Ammoniumhydroxid liefert, wie z. B. Harnstoff oder Acetamid, verwendet werden. Als Carbonat kann beispielsweise Natriumcarbonat, Kaliumcarbonat, Natriumhydrogencarbonat, Kaliumhydrogencarbonat, Ammoniumcarbonat oder Ammoniumhydrogencarbonat eingesetzt werden.

Im allgemeinen verwendet man auch bei dieser Methode eine Suspension von etwa 10 Teilen des schuppenförmigen Substrats in etwa 100 Teilen Wasser von etwa 5-100 °C, insbesondere etwa 20-95 °C, zu der man eine etwa 5-25 gewichtsprozentige Lösung eines Bariumsalzes und etwa 1,01-2 mol, bezogen auf das Bariumsalz, einer wässerigen Metallsulfatlösung, z. B. einer Titanylsulfatlösung gibt.

Nach Beendigung der Zugabe wird eine etwa 5 - 25 gewichtsprozentige Lösung einer Base oder einer alkalischen Carbonatlösung unter Rühren zugegeben bis der pH-Wert der Suspension auf einen Wert von etwa 3 - 10 eingestellt ist, in Abhängigkeit von der erwünschten Fällung eines Metalloxidhydrats oder eines Carbonats. Danach wird das gebildete Produkt in der Regel abfiltriert, gewaschen, bei etwa 105 - 110 °C getrocknet und gegebenenfalls kalziniert.

Falls die Zusatzfällung in der beschriebenen Weise durchgeführt wird, ist die Menge der Zusatzfällung durch die Menge des eingesetzten Metallsulfats festgelegt. Es ist jedoch auch möglich, das für die Zusatzfällung ausgewählte Metall nicht vor der Bariumsulfatfällung als Sulfat zuzusetzen, sondern erst nach der Bariumsulfatfällung. Geeignet sind dafür Metallsalze, wie beispielsweise Titantetrachlorid, Titantrichlorid, Aluminiumchlorid, Aluminiumnitrat, Zinkchlorid, Zinknitrat, Wissmutoxidchlorid, Magnesiumchlorid, Magnesiumnitrat, Calciumchlorid, Eisen(II)-chlorid, Eisen(III)-chlorid, Eisennitrat, Chromchlorid, Chromnitrat, Mangannitrat, Kobaltchlorid und Kobaltnitrat.

Diese Metalle werden als Oxid, Oxidhydrat oder Carbonat auf das mit Bariumsulfat beschichtete Substrat niedergeschlagen, was durch Mikroskopie, Elektronenmikroskopie und Röntgenstrukturanalyse nachgewiesen werden kann. Beispiele von Metalloxiden sind Titandioxid, Aluminiumoxid, Zirkonoxid, Calciumoxid und Magnesiumoxid. Beispiele für Oxidhydrate sind Titanoxidhydrat, Aluminiumoxidhydrat, Zirkoniumoxidhydrat, Zinkhydroxid, Calciumhydroxid und Magnesiumhydroxid. Beispiele für Metallcarbonate sind Magnesiumhydrogencarbonat, Calciumhydrogencarbonat und Zinkhydrogencarbonat.

Die Fällung kann in diesem Fall direkt anschließend an die Bariumsulfatfällung vorgenommen werden oder es kann ein mit Bariumsulfat beschichtetes Pigment wieder in Wasser suspendiert werden zur Zusatzfällung. In jedem Fall geht man von einer etwa 10 gewichtsprozentigen Suspension aus, zu der man bei einer Temperatur von etwa 5 - 100, vorzugsweise etwa 20 - 95 °C, etwa 2 - 25 Gewichtsprozent der wässerigen Metallsalzlösung und 2 - 25 Gewichtsprozent der wässerigen Base zugibt.

Bei der Fällung von Titanoxidhydrat beispielsweise ist es vorteilhaft, einen pH-Wert von 1,8 - 2,2 während der Fällung beizubehalten. Generell gilt, daß der pH-Wert der Suspension so eingestellt wird, daß nach Beendigung der Reaktion das gesamte Metall als Oxidhydrat, Oxid oder Carbonat ausgefällt ist. Danach wird in der Regel das Pigment abgetrennt, gewaschen, getrocknet und gegebenenfalls kalziniert. Beim Trocknen und insbesondere beim Kalzinieren bei Temperaturen bis zu 8 - 900 °C werden aus den Oxidhydraten und bei höheren Temperaturen auch aus den Carbonaten die entsprechenden Oxide gebildet.

Die gebildeten Pigmente können gegebenenfalls noch mit Farbstoffen angefärbt werden und sind sehr vorteilhaft zusammen mit den dafür üblichen Zusatzstoffen in Gesichtspudern und ähnlichen Zubereitung anzuwenden.

Beispiel 1

In einer Suspension von 50 g Muskovit-Glimmer einer Teilchengröße von 1 - 15 μm in 500 ml Wasser werden bei 25 °C 30 g Bariumchlorid gelöst und es werden unter Rühren 200 g einer 10 gewichtsprozentigen Natriumsulfatlösung mit einer Geschwindigkeit von 2,5 ml pro min zugegeben.

Nach 20-minütigem Nachrühren wird abfiltriert, mit Wasser gewaschen bis keine Chloridionen mehr nachweisbar sind und etwa 8 Stunden bei 105 — 110 °C getrocknet. Das Schuppenpigment zeigt gute Eigenschaften in bezug auf Ausbreitung und Haftung auf der Haut. Durch Röntgenbeugung und elektronenmikroskopische Untersuchung kann gezeigt werden, daß feine Teilchen von Bariumsulfat auf der Glimmeroberfläche abgeschieden sind.

Beispiel 2

In einer Suspension von 50 g Muskovit-Glimmer einer Teilchengröße von 20 — 60 μm in 500 ml Wasser werden bei 25 °C 30 g Bariumchlorid gelöst und es werden 200 g einer 10 gewichtsprozentigen Natriumsulfatlösung mit einer Geschwindigkeit von 2,5 ml pro min zulaufen lassen. Nach 20-minütigem Nachrühren wird das Produkt abfiltriert, mit Wasser gewaschen bis keine Chloridionen mehr nachweisbar sind und für etwa 8 Stunden bei 105 — 110 °C getrocknet. Das Schuppenpigment zeigt gute Eigenschaften in bezug auf Ausbreitung und Haftung auf der Haut.

Beispiel 3

Zu einer Suspension von 50 g Muskovit einer Teilchengröße von 1 — 15 μm in 500 ml Wasser werden bei 60 °C 300 ml einer 10 gewichtsprozentigen Bariumchloridlösung mit einer Geschwindigkeit von 3,3 ml pro min und gleichzeitig 200 ml einer 10 gewichtsprozentigen Kaliumsulfatlösung mit einer Geschwindigkeit von 2,5 ml pro min zugegeben. Nach 20-minütigem Nachrühren wird das Produkt wie in Beispiel 1 abfiltriert, mit Wasser gewaschen und ca. 8 Stunden bei 105 — 110 °C getrocknet. Das Schuppenpigment zeigt gute Eigenschaften in bezug auf Ausbreitung und Haftung auf der Haut.

Beispiel 4

Zu einer Suspension von 50 g Muskovit-Glimmer einer Teilchengröße von 1 — 15 µm in 500 ml Wasser werden bei 25 °C 300 ml einer 10 gewichtsprozentigen Bariumchloridlösung mit einer Geschwindigkeit von 3,3 ml pro min und gleichzeitig 200 ml einer 10 gewichtsprozentigen Magnesiumsulfatlösung mit einer Geschwindigkeit von 2,5 ml pro min zugegeben. Das Produkt wird wie in Beispiel 1 filtriert, gewaschen und getrocknet. Das Schuppenpigment zeigt gute Eigenschaften in bezug auf Ausbreitung und Haftung auf der Haut.

Beispiel 5

Zu einer Suspension von 50 g Sericit-Glimmer einer Teilchengröße von 1 — 20 µm in 500 ml Wasser werden bei 60 °C 300 ml einer 10 gewichtsprozentigen Bariumchloridlösung, deren pH-Wert durch Zugabe von konzentrierter Salzsäure auf 1,0 — 2,0 eingestellt ist, mit einer Geschwindigkeit von 3,3 ml pro min und gleichzeitig 200 ml einer 10 gewichtsprozentigen Natriumsulfatlösung mit einer Geschwindigkeit von 2,5 ml pro min unter Rühren zugegeben. Nach 20-minütigem Nachrühren wird das Produkt wie in Beispiel 1 abfiltriert, gewaschen und getrocknet. Das Schuppenpigment hat gute Eigenschaften in bezug auf Ausbreitung und Haftung auf der Haut.

Beispiel 6

Zu einer Suspension von 50 g Talk einer Teilchengröße von 1 — 20 µm in 500 ml Wasser mit 10 ml Alkohol werden bei 25 °C 300 ml einer 10 gewichtsprozentigen Bariumchloridlösung mit einer Geschwindigkeit von 3,3 ml pro min und gleichzeitig 200 ml einer 10 gewichtsprozentigen Natriumsulfatlösung mit einer Geschwindigkeit von 2,5 ml pro min unter Rühren zugegeben. Nach 20-minütigem Nachrühren wird das Produkt wie in Beispiel 1 abfiltriert, gewaschen und getrocknet.

Das Schuppenpigment hat gute Eigenschaften in bezug auf Ausbreitung und Haftung auf der Haut.

Beispiel 7

Zu einer Suspension von 50 g des nach Beispiel 1 hergestellten Pigments in 500 ml Wasser werden bei 70 °C 90 ml einer 10 gewichtsprozentigen Aluminiumsulfatlösung und einer 10 gewichtsprozentigen Natriumhydroxidlösung zugegeben, wobei der pH-Wert der Suspension im Bereich 6,0 — 8,0 gehalten wird. In dieser Suspension werden 2 g Rhodamin-B gelöst und es werden dann 25 ml einer 20 gewichtsprozentigen Tanninsäurelösung langsam zugegeben. Danach wird zur Vervollständigung des Farblackes eine 10 gewichtsprozentige Lösung von Brechweinstein zugegeben bis der Farbstoff verschwunden ist. Nach Abfiltrieren, Waschen mit Wasser und Trocknen erhält man ein Pigment entsprechend Beispiel 1, das zusätzlich einen Farblacküberzug besitzt.

Beispiel 8

Zu einer Suspension von 50 g Glimmer einer Teilchengröße von 1 — 15 µm in 500 ml Wasser werden bei 25 °C 300 ml einer 10 gewichtsprozentigen Bariumchloridlösung mit einer Geschwindigkeit von 3,3 ml pro min und gleichzeitig 200 ml einer 10 gewichtsprozentigen Kaliumsulfatlösung mit einer Geschwindigkeit von 2,5 ml pro min unter Rühren zugegeben. Nach 20-minütigem Nachrühren wird wie in Beispiel 1 abfiltriert, mit Wasser gewaschen und getrocknet. 50 g des so gewonnenen weißlichen Produkts werden in 500 g Wasser suspendiert und bei 70 °C mit 280 ml einer 15 gewichtsprozentigen Titanchloridlösung und gleichzeitig einer 10 gewichtsprozentigen Natriumhydroxidlösung versetzt, so daß der pH-Wert der Suspension bei 1,8 — 2,0 gehalten wird.

Das Produkt wird dann abfiltriert, mit Wasser gewaschen, etwa 8 Stunden bei 105 — 110 °C getrocknet und 1 Stunde bei etwa 800 °C kalziniert. Das Schuppenpigment hat exzellente Eigenschaften in bezug auf Ausbreitung und Haftung auf der Haut.

Beispiel 9

In einer Suspension von 90 g eines wie in Beispiel 8 mit Bariumsulfat beschichtenden Glimmerpigments in 900 ml Wasser werden 55 g Eisenammoniumsulfat, 10 g Magnsiumsulfat und 80 g Harnstoff gelöst. Die Suspension wird dann auf 95 — 98 °C erhitzt und 1 Stunde gerührt. Das dabei gebildete Produkt wird abfiltriert, mit Wasser gewaschen und etwa 8 Stunden bei etwa 105 — 110 °C getrocknet. Das Schuppenpigment hat eine gelbe Farbe wie Eisenoxidhydroxid und besitzt hervorragende Eigenschaften in bezug auf Transparenz und Glanz sowie eine gute Ausbreitung und Haftung auf der Haut.

Beispiel 10

Das nach Beispiel 9 hergestellte Pigment wird für eine Stunde bei 800 °C kalziniert. Man erhält ein rötliches Produkt, das nach Röntgenbeugung und elektronenmikroskopischer Untersuchung aus Glimmer mit feinen Teilchen von $Fe_2O_3$ und Bariumsulfat besteht.

## Beispiel 11

In einer Suspension von 50 g Glimmer einer Teilchengröße von 1 — 15 μm in 500 ml Wasser werden 24,4 g Bariumchlorid gelöst. Zu der auf 85 — 92 °C erhitzten Suspension werden 300 ml einer 12 gewichtsprozentigen Titansulfatlösung mit einer Geschwindigkeit von 5 ml pro min unter Rühren zugegeben und danach etwa 150 ml einer 10 gewichtsprozentigen Natriumhydroxidlösung mit einer Geschwindigkeit von 5 ml pro min, so daß der pH-Wert am Ende der Reaktion etwa 5, 6 beträgt. Das produkt wird abfiltriert, mit Wasser gewaschen, etwa 8 Stunden bei 105-110 °C getrocknet und 1 Stunde bei etwa 800 °C kalziniert. Die Hafteigenschaften dieses Produkts sind gegenüber einem Glimmerpigment mit Bariumsulfatbeschichtung verbessert.

## Beispiel 12

Zu einer Suspension von 50 g Glimmer einer Teilchengröße von 1-15 μm in 500 ml Wasser werden gleichzeitig 300 ml einer 10 gewichtsprozentigen Bariumchloridlösung mit einer Geschwindigkeit von 3,0 ml pro min und 340 ml einer 10 gewichtsprozentigen Magnesiumsulfatlösung mit einer Geschwindigkeit von 3 ml pro min unter Rühren zugegeben. Danach wird der pH-Wert der Suspension durch Zugabe einer 10 gewichtsprozentigen Natriumcarbonatlösung auf 8,0 eingestellt. Das mit Bariumsulfat und Magnesiumcarbonat beschichtete Produkt wird abfiltriert, mit Wasser gewaschen und etwa 8 Stunden bei 105-110 °C getrocknet. Es zeigt eine gute Ausbreitung auf der Haut.

## Beispiel 13

Zu einer Suspension von 50 g Glimmer einer Teilchengröße von 1-15 μm in 500 ml Wasser werden bei 70 °C 200 ml einer 10 gewichtsprozentigen Bariumchloridlösung mit einer Geschwindigkeit von 5 ml pro min und gleichzeitig 250 ml einer 10 gewichtsprozentigen Zinksulfatlösung mit einer Geschwindigkeit von 5 ml pro min unter Rühren zugegeben. Danach wird der pH-Wert der Suspension durch Zugabe einer Lösung, die 10 Gewichtsprozent Kaliumhydrogencarbonat und 10 Gewichtsprozent Kaliumcarbonat enthält, auf 8,5 eingestellt.

Durch Abfiltrieren, Waschen mit Wasser, Trocknen bei etwa 105-110 °C für etwa 8 Stunden und Kalzinieren bei etwa 650 °C für eine Stunde erhält man ein weißliches Pigment mit einer Bariumsulfat- und Zinkoxidbeschichtung. Das Pigment besitzt eine gute Ausbreitung und Haftung.

## Beispiel 14

Zu einer Suspension von 50 g Glimmer einer Teilchengröße von 1-15 μm in 500 ml Wasser werden bei 65 °C 300 ml einer 10 gewichtsprozentigen Bariumchloridlösung mit Geschwindigkeit von 3 ml pro min und gleichzeitig 400 ml einer 10 gewichtsprozentigen Eisenammoniumsulfatlösung mit einer Geschwindigkeit von 4 ml pro min unter Rühren zugegeben. Danach wird der pH-Wert der Suspension durch Zugabe einer 10 gewichtsprozentigen Kaliumhydroxidlösung auf 7,0 eingestellt und das gebildete Produkt wird abfiltriert, mit Wasser gewaschen und etwa 8 Stunden bei 105-110 °C getrocknet. Man erhält ein Produkt mit einer Eisenoxidhydroxid- und Bariumsulfatschicht auf Glimmer.

## Beispiel 15

Das nach Beispiel 14 hergestellte gelbe Pigment wird 1 Stunde bei etwa 800 °C kalziniert, wobei man ein rötliches Pigment erhält.

## Beispiel 16

Zu einer Suspension von 50 g Glimmer einer Teilchengröße von 1-15 μm in 500 ml Wasser werden bei 70 °C 200 ml einer 10 gewichtsprozentigen Bariumchloridlösung mit einer Geschwindigkeit von 5 ml pro min und gleichzeitig 200 ml einer 10 gewichtsprozentigen Aluminiumsulfatlösung unter Rühren zugegeben. Danach wird der pH-Wert der Suspension durch Zugabe einer 10 gewichtsprozentigen Kaliumhydroxidlösung auf 7,5 eingestellt und das gebildete Produkt wird abfiltriert, mit Wasser gewaschen und etwa 8 Stunden bei 105-110 °C getrocknet. Man erhält ein Pigment mit einer Bariumsulfat- und Aluminiumhydroxidschicht, das gute Ausbreitung und Haftung auf der Haut besitzt.

## Beispiel 17

Es wird analog Beispiel 11 verfahren, wobei jedoch anstelle von Glimmer Talk mit einer Teilchengröße von 1-20 μm eingesetzt wird.

## Beispiel 18

Es wird ein Kompaktpuder zum Gebrauch in Make up hergestellt durch Mischen der folgenden Bestandteile :

63,5 Gewichtsteile des nach Beispiel 1 hergestellten Pigments.
    5,0 Gewichtsteile eines Farbpigments
    8,0 Gewichtsteile Lanolinsäure
    4,0 Gewichtsteile Isopropylmyristat
    2,5 Gewichtsteile Calciumstearat
17,0 Gewichtsteile Kornstärke

In dem so hergestellten Kosmetikum besitzt das Pigment nach dieser Erfindung bessere Eigenschaften in bezug auf Transparenz, Glanz, Ausbreitung und Haftung als der nach dem Stand der Technik verwendete Glimmer oder Talk.

## Beispiel 19

Ein Kompaktpuder zum Gebrauch in Make up wird durch Mischen der folgenden Bestandteile hergestellt :

75,0 Gewichtsteile des Pigments nach Beispiel 11

3,0 Gewichtsteile des gefärbten Pigments nach Beispiel 15

2,0 Gewichtsteile eines Farbpigments
3,0 Gewichtsteile Lanolinsäure
3,0 Gewichtsteile Isopropylmyristat
2,0 Gewichtsteile Calciumstearat
12,0 Gewichtsteile Kornstärke

In dem so hergestellten Kosmetikum besitzt das Pigment nach der Erfindung bessere Eigenschaften in bezug auf Transparenz, Glanz, Ausbreitung und Haftung als der nach dem Stand der Technik benutzte Glimmer oder Talk.

## Patentansprüche

1. Schuppenförmiges Pigment, dadurch gekennzeichnet, daß ein schuppenförmiges Substrat mit einem festhaftenden Überzug aus Bariumsulfat, gegebenenfalls zusammen mit einem Metalloxid, Metalloxidhydrat oder Metallcarbonat, versehen ist.

2. Pigment nach Anspruch 1, dadurch gekennzeichnet, daß als Substrat Glimmer, Talk oder Kaolin enthalten ist.

3. Pigment nach Anspruch 1 oder 2, dadurch gekennzeichnet, daß neben Bariumsulfat noch ein Oxid, Oxidhydrat oder Carbonat von Titan, Aluminium, Zink, Magnesium, Eisen, Chrom, Mangan oder Kobalt enthalten ist.

4. Pigment nach einem der Ansprüche 1-3, dadurch gekennzeichnet, daß es zusätzlich ein Farbpigment enthält.

5. Verfahren zur Herstellung eines schuppenförmigen Pigments, dadurch gekennzeichnet, daß man eine wässerige Suspension eines schuppenförmigen Substrats gleichzeitig oder nacheinander mit einer wässerigen, Bariumionen-enthaltenden Lösung und einer wässerigen, Sulfationen-enthaltenden Lösung versetzt und danach das mit Bariumsulfat beschichtete Pigment abtrennt, trocknet und gegebenenfalls kalziniert.

6. Verfahren nach Anspruch 5, dadurch gekennzeichnet, daß als Substrat Glimmer, Talk oder Kaolin verwendet wird.

7. Verfahren nach Anspruch 5 oder 6, dadurch gekennzeichnet, daß nach der Bariumsulfatfällung die Fällung eines Metalloxids, Metalloxidhydrats oder Metallcarbonats durch Zugabe einer wässerigen Base oder einer wässerig-alkalischen, Carbonationen-enthaltenden Lösung vorgenommen wird.

8. Verfahren nach Anspruch 7, dadurch gekennzeichnet, daß zur Fällung des Metalloxids, Oxidhydrats oder Carbonats ein Metallsalz der Gruppe Titan, Aluminium, Zink, Magnesium, Eisen, Chrom, Mangan und Kobalt eingesetzt wird.

9. Verfahren nach einem der Ansprüche 5-8, dadurch gekennzeichnet, daß die Sulfationen im stöchiometrischen Überschuß gegenüber den Bariumionen eingesetzt werden.

10. Verwendung eines Pigments nach einem der Ansprüche 1-9 zur Herstellung von kosmetischen Mitteln.

## Claims

1. Flaky pigment, characterised in that a flaky substrate is provided with a firmly adhering coating of barium sulphate, if appropriate together with a metal oxide, hydrated metal oxide or metal carbonate.

2. Pigment according to Claim 1, characterised in that the substrate present is mica, talc or kaolin.

3. Pigment according to Claim 1 or 2, characterised in that, in addition to barium sulphate, an oxide, hydrated oxide or carbonate of titanium, aluminium, zinc, magnesium, iron, chromium, manganese or cobalt is also present.

4. Pigment according to one of Claims 1-3, characterised in that it additionally contains a coloured pigment.

5. Process for the preparation of a flaky pigment, characterised in that an aqueous suspension of a flaky substrate is treated, simultaneously or successively, with an aqueous solution containing barium ions and with an aqueous solution containing sulphate ions, and the pigment coated with barium sulphate is then separated off, dried and, if appropriate, calcined.

6. Process according to Claim 5, characterised in that the substrate used is mica, talc or kaolin.

7. Process according to Claim 5 or 6, characterised in that, after the precipitation of barium sulphate, a precipitation of a metal oxide, hydrated metal oxide or metal carbonate is carried out by addition of an aqueous base or an aqueous-alkaline solution containing carbonate ions.

8. Process according to Claim 7, characterised in that a metal salt from the group comprising titanium, aluminium, zinc, magnesium, iron, chromium, manganese and cobalt is used for the precipitation of the metal oxide, hydrated oxide or carbonate.

9. Process according to one of Claims 5-8, characterised in that the sulphate ions are used in a stoichiometric excess over the barium ions.

10. Use of a pigment according to one of Claims 1-9 for the preparation of cosmetic agents.

## Revendications

1. Pigment sous forme de paillettes, caractérisé en ce qu'un substrat sous forme de paillettes est pourvu d'un revêtement adhérant fermement et constitué de sulfate de baryum, éventuellement avec un oxyde métallique, un hydrate d'oxyde métallique ou un carbonate métallique.

2. Pigment selon la revendication 1, caractérisé en ce que, comme substrat, il contient du mica, du talc ou du kaolin.

3. Pigment selon la revendication 1 ou 2, caractérisé en ce que, outre le sulfate de baryum, il contient encore un oxyde, un hydrate d'oxyde ou un carbonate de titane, d'aluminium, de zinc, de magnésium, de fer, de chrome, de manganèse ou de cobalt.

4. Pigment selon une des revendications 1 à 3, caractérisé en ce qu'il contient, en outre, un pigment coloré.

5. Procédé de préparation d'un pigment sous forme de paillettes, caractérisé en ce que, à une suspension aqueuse d'un substrat sous forme de paillettes, on ajoute simultanément ou successivement une solution aqueuse contenant des ions baryum et une solution aqueuse contenant des ions sulfate, après quoi on sépare le pigment enduit de sulfate de baryum, on le sèche et on le calcine éventuellement.

6. Procédé selon la revendication 5, caractérisé en ce que, comme substrat, on utilise le mica, le talc ou le kaolin.

7. Procédé selon la revendication 5 ou 6, caractérisé en ce que, après la précipitation du sulfate de baryum, on effectue la précipitation d'un oxyde métallique, d'un hydrate d'oxyde métallique ou d'un carbonate métallique par addition d'une base aqueuse ou d'une solution alcaline aqueuse contenant des ions carbonate.

8. Procédé selon la revendication 7, caractérisé en ce que, pour la précipitation de l'oxyde métallique, de l'hydrate d'oxyde ou du carbonate, on utilise un sel d'un métal choisi parmi le groupe comprenant le titane, l'aluminium, le zinc, le magnésium, le fer, le chrome, le manganèse et le cobalt.

9. Procédé selon une des revendications 5 à 8, caractérisé en ce qu'on utilise les ions sulfate en un excès stoechiométrique vis-à-vis des ions baryum.

10. Utilisation d'un pigment selon une des revendications 1 à 9 pour la préparation d'agents cosmétiques.